# EUROPÄISCHE PATENTSCHRIFT

(11) **EP 1 719 998 B1**
(45) Veröffentlichungstag und Bekanntmachung des Hinweises auf die Patenterteilung: **21.07.2010**
(21) Anmeldenummer: 06100924.7
(22) Anmeldetag: 27.01.2006
(51) Int. Cl.: G01N 1/28, G02B 21/00

(54) **Laser-Mikrodissektionsgerät**
Laser microdissection system
Appareil de microdissection au laser

(30) Priorität: 24.02.2005 DE 102005008925
(43) Veröffentlichungstag der Anmeldung: 08.11.2006
(73) Patentinhaber: Leica Microsystems CMS GmbH, 35578 Wetzlar (DE)
(72) Erfinder: Weiß, Albrecht, 35440, Linden (DE)
(74) Vertreter: Reichert, Werner Franz

(56) Entgegenhaltungen:
- EP-A- 1 186 930
- EP-A- 1 486 811
- EP-A- 1 505 424
- WO-A-02/19594
- WO-A-2004/061425
- WO-A-2005/096058

## Beschreibung

Die Erfindung betrifft ein Laser-Mikrodissektionsgerät mit den Merkmalen des Oberbegriffs des Anspruchs 1.

Als Laser-Mikrodissektion wird ein Verfahren bezeichnet, mit dem Im Bereich der Medizin und der Mikrobiologie aus einer im allgemeinen flachen Probe, beispielsweise Zellen oder einem Gewebeschnitt, ein kleines Stück, ein sogenanntes Dissektat, mit einem fein fokussierten Laserstrahl ausgeschnitten wird. Das ausgeschnittene Stück steht danach für weitere biologische oder medizinische, zum Beispiel histologische, Untersuchungen zu Verfügung. Ein Laser-Mikrodissektionsgerät der eingangs genannten Art besteht aus einem Mikroskop mit einem auf die Probe gerichteten Beleuchtungsstrahlengang und einem die Probe abbildenden Abbildungsstrahlengang. Ein Laser liefert einen Laserstrahl, der in das Mikroskop eingekoppelt und auf die Probe gerichtet wird. Mit dem fokussierten Laserstrahl wird ein Stück aus der Probe ausgeschnitten. Das Laser-Mikrodissektionsgerät umfasst außerdem eine Fluoreszenzeinrichtung, die in bekannter Weise einen Anregungsfilter, einen dichromatischen Strahlteiler und einen Sperrfilter aufweist

Ein solches Gerät ist beispielsweise das Leica AS LMD der Fa. Leica Microsystems Wetzlar GmbH. Es besteht aus einem aufrechten Mikroskop, in dessen optischer Auflichtachse der Laserstrahl eingekoppelt und von oben durch das Objektiv auf die zu schneidende Probe gerichtet wird. Die Auflichtachse mit dem hier durchgeführten Laserstrahl kann dabei Linsen, Blenden oder Strahlscanner für den Laserstrahl aufweisen und wird daher auch als Mikrodissektions-Strahlengang bezeichnet. Oberhalb der Auflichtachse ist eine zusätzliche Fluoreszenz-Achse angeordnet. Diese Fluoreszenz-Achse umfasst die komplette Fluoreszenz-Beleuchtung mit Lichtquelle und Optik sowie den klassischen Fluoreszenzwürfel mit Anregungsfilter, dichromatischem Strahlteiler und Sperrfilter. Durch die Anordnung der Fluoreszenz-Achse oberhalb des Mikrodissektions-Strahlengang ist eine gleichzeitige Fluoresaenzbeobachtung und Mikrodissektion möglich. Die Fluoreszenz-Achse wird manuell bedient (z.B, umgeschaltet). Da die Fluoreszenz-Achse oberhalb des Mikrodissektions-Strahlengangs auf das Mikroskop aufgesetzt ist, besteht kein Einbauraum und keine Zugriffsmöglichkeit für die Motorisierung der umschaltbaren Bauteile in der Fluoreszenz-Achse.

Die WO 2004/061425 A1 offenbart ein Mikrotom, das mit einem Laser von einem größeren Objekt dünne Scheibchen abschneidet. Die Scheibchen können weiterbehandelt werden, indem sie mit einem Laser-Mikrodissektionsgerät mikrodissektioniert werden, das heißt mikroskopische Teile des Scheibchens mit einem Laserstrahl ausgeschnitten werden.

Die EP 1 486 B11 A1 offenbart ein Mikroskop mit einer Fluoreszenzeinrichtung, die ein Anregungsfilter, einen Strahlteiler und ein Sperrfilter sowie zusätzlich ein streulichtreduzierendes Mittel besitzt. Das Sperrfilter ist für übliche sichtbare Wellenlängenbereiche ausgelegt.

Die EP 1 196 930 A2 offenbart ein konfokales Rastermikroskop mit einer zusätzlichen Lichtquelle für die Objektmanipulation. Durch Scannen wird ein dreidimensionalesObjekt räumlich an allen Stellen abgebildet und manipuliert.

Andere Forschungsmikroskope besitzen einen höheren Automatisierungsgrad, bei dem auch motorisierte und/oder automatisierte Umschaltungen von Bauteilen der Fluoreszenz-Achse vorgesehen sind. Daher enthalten diese Forschungsmikroskope mit hohem Motorisierungs- bzw. Automatisierungsgrad üblicherweise eine in das Stativ integrierte Fluoreszenz-Achse. Allerdings kann dann kein Laser eingekoppelt werden.

Es ist daher Aufgabe der vorliegenden Erfindung, ein Laser-Mikrodissektionsgerät anzugeben, welches eine Integration eines Mikroskops mit einer motorisierten, Integrierten Fluoreszenz-Achse erlaubt.

Die Aufgabe wird gelöst durch ein Laser-Mikrodissektionsgerät mit den Merkmalen des Oberbegriffs des Anspruchs 1, welches sich dadurch auszeichnet, dass der dichromatische Strahlteiler und das Sperrfilter für den Laserstrahl spektral durchlässig sind.

Dichromatische Strahlteiler und Sperrfilter von Fluoreszenzfiltersystemen sind üblicherweise für Wellenlängen des Lasers, der typischerweise ein UV-Laser mit zum Beispiel 337 nm (Nanometer) Wellenlänge ist, nicht durchlässig. Der Laserstrahl geht daher nicht durch ein im Strahlengang positioniertes Fluoreszenzfiltersystem, wie es aus dem Stand der Technik bekannt ist, hindurch. Damit war bisher mit einer integrierten Fluoreszenz-Achse im Mikroskop eine gleichzeitige Fluoreszenzbeobachtung und Mikrodissektion nicht möglich. Durch die erfindungsgemäße Ausgestaltung des Laser-Mikrodissektionsgeräts wird nunmehr dieses Problem gelöst, in dem ein spezielles Fluoreszenz-Filtersystem vorgesehen ist. Dazu müssen der dichromatische Strahlteiler und das Sperrfilter neben ihren üblichen Transmissionsbereich für die Fluoreszenzbeleuchtung bzw. Fluoreszenzabbildung zusätzlich auch im Wellenlängenbereich des verwendeten UV-Lasers spektral durchlässig sein.

Der Laserstrahl wird dann durch das Sperrfilter und den dichromatischen Strahlteiler hindurch auf die Probe gerichtet. Dies ermöglicht, dass die Fluoreszenzbeobachtung der Probe und das Schneiden der Probe mittels des Laserstrahls gleichzeitig durchgeführt werden können. Daraus ergeben sich für den Benutzer deutlich verbesserte Möglichkeiten, unterschiedlichste Probenbereiche (z. B. Zelltypen, Zellbestandteile usw.) zu unterscheiden und für die Mikrodissektion auszuwählen.

In einer vorteilhaften Ausgestaltung des Laser-Mikrodissektionsgeräts wird der Laserstrahl des Lasers durch einen zweiten dichromatischen Strahlteiler in den Abbildungsstrahlengang des Mikroskops eingekoppelt und auf das Sperrfilter gerichtet.

Eine besonders servicefreundliche und auch zur Nachrüstung eines vorhandenen Mikroskops geeignete Ausgestaltung des Laser-Mikrodissektionsgeräts wird erzielt, indem einem Mikroskop außerhalb des vorhandenen Beleuchtungsstrahlengangs mit der Fluoreszenzeinrichtung ein separater Mikrodissektions-Strahlengang zugeordnet ist. Der Mikrodissektions-Strahlengang führt den Laserstrahl auf das Sperrfilter und koppelt ihn auf diese Weise in den Beleuchtungsstrahlengang ein. Im Mikrodissektions-Strahlengang können auf den Laserstrahl wirkende Linsen und/oder eine Aperturblende und/oder ein zweiter dichromatischer Strahlteiler zum Umlenken des Laserstrahls vorgesehen sein.

Dabei erweist es sich als besonders fertigungs- und servicefreundlich, wenn der Mikrodissektions-Strahlengang in einer baulichen Einheit zusammengefasst ist, die über mindestens eine Justagefläche an das Mikroskop angesetzt werden kann. Zusätzlich erweist es sich als Vorteil, wenn der Mikrodissektions-Strahlengang in der baulichen Einheit bereits optisch und mechanisch vorjustiert ist. Indem die bauliche Einheit und das Mikroskop hochpräzise Justageflächen aufweisen, kann die bauliche Einheit justagefrei an das Mikroskop angesetzt werden.

Das erfindungsgemäße Laser-Mikrodissektionsgerät kann sowohl mit einem inversen Mikroskop als auch mit einem aufrechten Mikroskop realisiert werden. Für die Routineuntersuchungen, beispielsweise im Bereich der Pathologie, erweist es sich als vorteilhaft, wenn die Probe mit mehreren Fluoreszenzfarbstoffen angefärbt werden kann. Dies erlaubt dann eine spektrale Multiband-Fluoreszenzbeobachtung. Typische Fluoreszenzfarbstoffe sind beispielsweise DAPI, FITC sowie Texas Red. Indem der dichromatische Strahlteiler und das Sperrfilter, die für den Laserstrahl spektral durchlässig sind, als auch das Anregungsfilter solche Transmissionseigenschaften aufweisen, die eine spektrale Multiband-Fluoreszenzbeobachtung gleichzeitig ermöglichen, ist ebenfalls gleichzeitig eine Probengewinnung mittels Laser-Mikrodissektion möglich.

Die Erfindung wird nachfolgend an einem Ausführungsbeispiel anhand der schematischen Zeichnung erläutert. Es zeigen:
- ***Fig.1***: ein Laser-Mikrodissektionsgerät;
- ***Fig. 2***: die Transmissionkurven des Anregungsfilters, des Sperrfilters sowie des dichromatischen Strahlteilers für einen einzigen Fluoreszenzfarbstoffs;
- ***Fig. 3***: die Transmissionkurven des Anregungsfilters, des Sperrfilters sowie des dichromatischen Strahlteilers für Multiband-Fluoreszenz mit mehreren Fluoreszenzfarbstoffen.

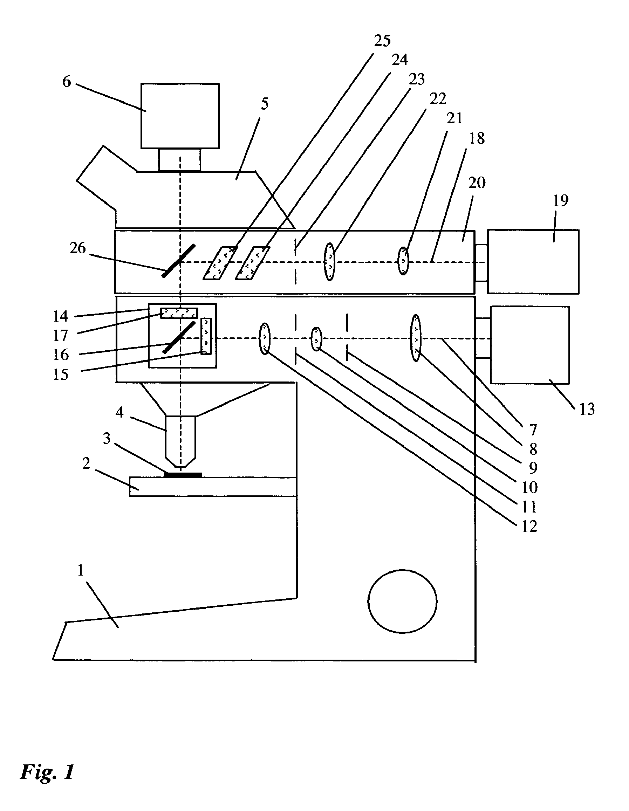

***Fig.*** 1 zeigt ein Laser-Mikrodissektionsgerät mit einem Mikroskop 1. Auf dem Mikroskoptisch 2 ist die Probe 3 angeordnet. Sie wird durch ein Objektiv 4 durch einen Tubus 5 auf eine Kamera abgebildet. Das Mikroskop 1 weist eine integrierte Fluoreszenz-Achse 7 auf, in der eine Linse 8, eine Aperturblende 9, eine Linse 10, ein Leuchtfeldblende 11 sowie eine Linse 12 angeordnet sind. Das vom Lampenhaus 13 ausgehende Beleuchtungslicht durchläuft die integrierte Fluoreszenz-Achse 7 und trifft auf die Fluoreszenzeinrichtung 14. Diese umfasst ein Anregungsfilter 15, einen dichromatischen Strahlteiler 16 sowie ein Sperrfilter 17, die auf mindestens einen Fluoreszenzfarbstoff und dessen Fluoreszenzband spektral abgestimmt sind.

Oberhalb der integrierten Fluoreszenz-Achse 7 ist ein Mikrodissektions-Strahlengang 18 mit einem UV-Laser 19 angeordnet. Der Mikrodissektions-Strahlengang 18 ist in einer baulichen Einheit 20 angeordnet, die als Aufsatz oberhalb der integrierten Fluoreszenz-Achse 7 auf das Mikroskop 1 aufgesetzt ist.

Der von dem UV-Laser 19 ausgehende Laserstrahl durchläuft im Mikrodissektions-Strahlengang 18 eine erste Linse 21 und eine zweite Linse 22, eine Aperturblende 23 sowie ein erstes Scannerprisma 24 und ein zweites Scannerprisma 25. Dann trifft der Laserstrahl auf den dichromatischen Teiler 26, und wird von diesem zum Sperrfilter 17 umgelenkt. Das Sperrfilter 17 und der dichromatische Strahlteiler 16 in der Fluoreszenzeinrichtung 14 sind für den Laserstrahl spektral durchlässig. Auf diese Weise tritt der Laserstrahl durch die Fluoreszenzeinrichtung 14 hindurch und wird durch das Objektiv 4 auf die Probe 3 fokussiert. Mit dem fokussierten Laserstrahl werden gewünschte Probenbereiche aus der Probe ausgeschnitten. Während des Schneidvorgangs ist gleichzeitig eine Beobachtung des Fluoreszenzbildes, das von der Kamera 6 aufgenommen wird, möglich.

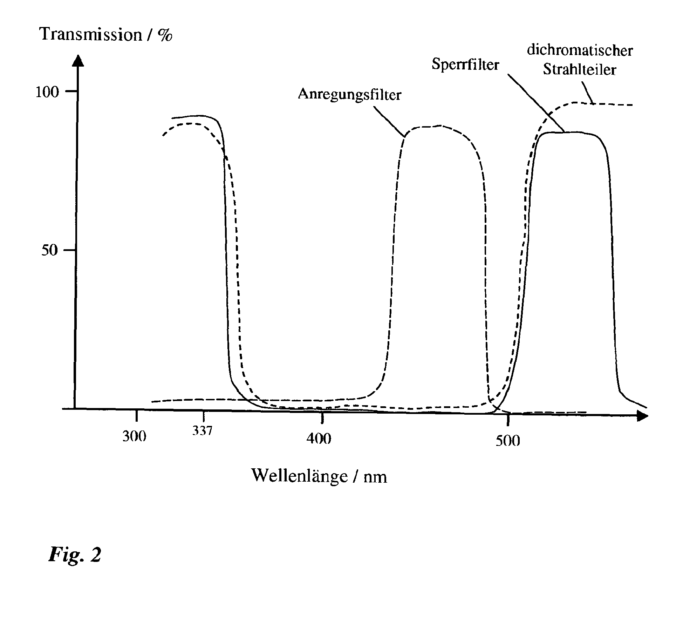

***Fig.* 2** zeigt den Transmissionsverlauf in Abhängigkeit von der Wellenlänge (in Nanometer) für das Anregungsfilter 15, das Sperrfilter 17 und den dichromatischen Strahlteiler 16. Die Laserwellenlänge im vorliegenden Fall beträgt 337 Nanometer. Das Anregungsfilter hat nur ein einziges Transmissionsband, welches auf einen zugeordneten Fluoreszenzfarbstoff abgestimmt ist. Das Sperrfilter ist in diesem Bereich nicht durchlässig, sondern hat ein Transmissionsband im durch Fluoreszenz erzeugten langwelligen Bandbereich. Zusätzlich weist das Sperrfilter eine hohe Transmission für den Wellenlängenbereich um 337 nm (Nanometer), also für die Wellenlänge des UV-Lasers auf. Anpassungen an andere Laser-Wellenlängen sind selbstverständlich möglich. Auch der dichromatische Strahlteiler 16 ist im Bereich des abgestrahlten Fluoreszenzlichtes, also im selben Bereich wie das Sperrfilter 17, durchlässig. Zusätzlich hat der dichromatische Strahlteiler 16, ebenso wie das Sperrfilter 17, eine hohe Transmission für die Wellenlänge des Laserstrahls.

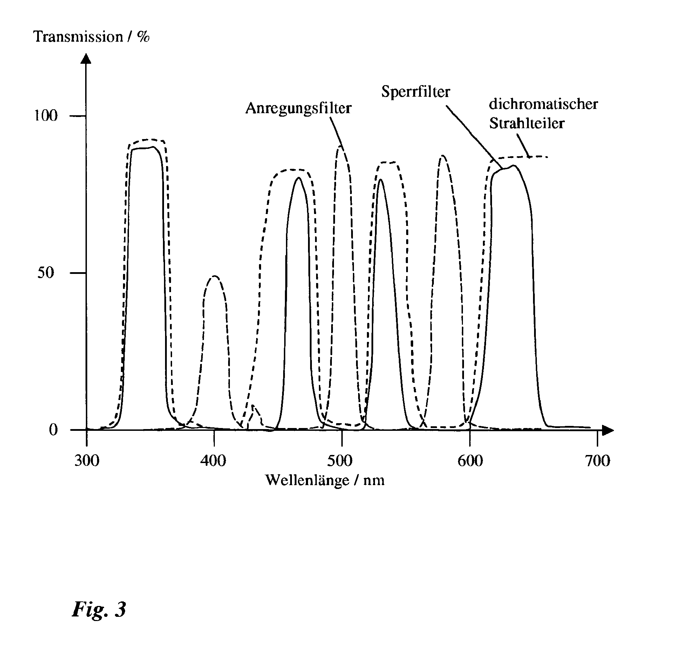

***Fig.* 3** zeigt die Transmissionskurven in Abhängigkeit von der Wellenlänge (in Nanometer) für einen anderen Filtersatz eines Fluoreszenzwürfels, der aus einem Multiband-Anregungsfilter, einem Multiband-Sperrfilter sowie einem dichromatischen Multiband-Strahlteiler besteht, die mehrere spektrale Transmissionsbänder aufweisen.

Im vorliegenden Ausführungsbeispiel ist das Multiband-Filtersystem abgestimmt für eine kombinierte Multiband-Fluoreszenzbetrachtung durch Anfärbung der Probe mit drei verschiedenen Fluoreszenzfarbstoffen. Im vorliegenden Fall handelt es sich dabei um die Farbstoffe DAPI, FITC, Texas Red. Das Anregungsfilter und das Sperrfilter weisen entsprechend den drei genannten Fluoreszenzfarbstoffen jeweils drei Transmissionsbanden für die Fluoreszenz auf. Zusätzlich weisen der dichromatische Strahlteiler und das Sperrfilter ein zusätzliches Transmissionsband im nahen UV-Wellenlängenbereich zwischen 337 nm und 355 nm auf.

Damit ist der vorliegende Multiband-Filtersatz für eine Verwendung mit einem N2-Laser oder einem Festkörper-Laser geeignet. Wenn die Fluoreszenzeinrichtung 14 in dem Mikroskop 1 aus *Fig.1* mit einem hier beschriebenen Multiband-Fluoreszenzfiltersatz betrieben wird, erlaubt dies somit eine simultane Fluoreszenzbeobachtung der Probe 3, die mit den Farbstoffen DAPI, FITC und Texas Red angefärbt ist, als auch das gleichzeitige Laserschneiden der Probe.

### Bezugszeichenliste

- 1: Mikroskop
- 2: Mikroskoptisch
- 3: Probe
- 4: Objektiv
- 5: Tubus
- 6: Kamera
- 7: integrierte Fluoreszenz-Achse
- 8: Linse
- 9: Apertur-Blende
- 10: Linse
- 11: Leuchtfeld-Blende
- 12: Linse
- 13: Lampenhaus
- 14: Fluoreszenzeinrichtung
- 15: Anregungsfilter
- 16: dichromatischer Strahlteiler
- 17: Sperrfilter
- 18: Mikrodissektions-Strahlengang
- 19: UV-Laser
- 20: Bauliche Einheit
- 21: Erste Linse
- 22: Zweite Linse
- 23: Apertur-Blende
- 24: Erstes Scannerprisma
- 25: Zweites Scannerprisma
- 26: Zweiter dichromatischer Teiler

## Patentansprüche

1. Laser-Mikrodissektionsgerät, das mit einem Laserstrahl eines Lasers (99) eine mikroskopische Probe (3) schneidet,
welches ein Mikroskop (1) mit einem auf die Probe (3) gerichteten Beleuchtungsstrahlengang und einem die Probe (3) abbildenden Abbildungsstrahlengang sowie eine Fluoreszenzeinrichtung (14) umfasst, welche ein Anregungsfilter (15), einen dichromatischen Strahlteiler (16) und ein Sperrfilter (17) aufweist,
**dadurch gekennzeichnet,**
**dass** der dichromatische Strahlteiler (16) und das Sperrfilter (17) für den Laserstrahl spektral durchlässig sind,
**dass** dem Mikroskop (1) außerhalb des vorhandenen Beleuchtungsstrahlengangs mit der Fluoreszenzeindchtung (4) ein separater Mikrodissektions-Strahlangang (18) zugeordnet ist, der den Laserstrahl auf das Sperrfilter (17) führt und ihn auf diese Weise in den Beleuchtungsstrahlengang ein koppelt,
und **dass** der Laserstrahl durch das Sperrfilter (17) und den dichromatischen Strahlteiler (16) der Fluoreszenzeinrichtung (14) hindurch auf die Probe gerichtet ist.

2. Laser-Mikrodissektionsgerät nach Anspruch 1,
**dadurch gekennzeichnet,**
**dass** die Fluoreszenzeinrichtung (14) und das Schneiden der Probe (3) mittels des Laserstrahls gleichzeitig aktivierbar sind.

3. Laser-Mikrodissektionsgerät nach einem der Ansprüche 1 oder 2,
**dadurch gekennzeichnet,**
**dass** der Laserstrahl des Lasers (19) durch einen zweiten dichromatischen Strahlteiler (26) in den Abbildungsstrahlengang des Mikroskops eingekoppelt ist, der ihn auf das Sperrfilter lenkt.

4. Laser-Mikrodissektionsgerät nach Anspruch 3,
**dadurch gekennzeichnet, dass** der separate Mikrodissektions-Strahlengang (18) auf den Laserstrahl wirkende Linsen (21, 22) und/oder eine Aperturblende (9) und/oder den zweiten dichromatischen Strahlteiler (26) umfasst.

5. Laser-Mikrodissektionsgerät nach Anspruch 4,
**dadurch gekennzeichnet, dass** der Mikradissektions-Strahlengang in einer baulichen Einheit (20) zusammengefasst ist, die über mindestens eine Justagefläche an das Mikroskop (1) angesetzt ist, so dass der Laserstrahl durch das Sperrfilter (17) tritt.

6. Laser-Mikrodissektionsgerät nach Anspruch 5,
**dadurch gekennzeichnet, dass** der Mikrodissektions-Strahlengang in der baulichen Einheit (20) optisch vorjustiert ist und dass die bauliche Einheit (20) und das Mikroskop (1) hochpräzise Montageflächen aufweisen, mittels derer die bauliche Einheit (20) justagefrei an das Mikroskop (1) angesetzt werden kann.

7. Laser-Mikrodissektionsgerät nach einem der vorhergehenden Ansprüche, **dadurch gekennzeichnet,**
**dass** das Mikroskop als ein inverses Mikroskop ausgebildet ist.

8. Laser-Mikrodissektionsgerät nach einem der vorhergehenden Ansprüche, **dadurch gekennzeichnet,**
**dass** das Mikroskop (1) als ein aufrechtes Mikroskop ausgebildet ist.

9. Laser-Mikrodissektionsgerät nach einem der vorhergehenden Ansprüche, **dadurch gekennzeichnet,**
**dass** das Anregungsfilter (15) als auch der dichromatische Strahlteiler (16) und das Sperrfilter (17), die für den Laserstrahl spektral durchlässig sind, solche Transmissionseigenschaften aufweisen, die eine spektrale Multiband-Fluoreszenz-Beobachtung mit mehreren Fluoreszenzfarbstoffen gleichzeitig ermöglichen.

## Claims

1. A laser microdissection apparatus which cuts a microscopic specimen (3) with a laser beam of a laser (19) and
which includes a microscope (1) with an illumination beam path directed on to the specimen (3) and an imaging beam path which produces the image of the specimen (3) as well as a fluorescence device (14) having an excitation filter (15), a dichroic beam splitter (16) and a blocking filter (17),
**characterised in that**
the dichroic beam splitter (16) and the blocking filter (17) are spectrally transmissive for the laser beam,
associated with the microscope (1) outside the existing illumination beam path with the fluorescence device (4) is a separate microdissection beam path (18) which guides the laser beam on to the blocking filter (17) and **in that** way couples it into the illumination beam path, and
the laser beam is directed on to the specimen through the blocking filter (17) and the dichroic beam splitter (16) of the fluorescence device (14).

2. A laser microdissection apparatus according to claim 1 **characterised in that** the fluorescence device (14) and cutting of the specimen (3) by means of the laser beam are simultaneously activatable.

3. A laser microdissection apparatus according to one of claims 1 and 2 **characterised in that** the laser beam of the laser (19) is coupled through a second dichroic beam splitter (26) into the imaging beam path of the microscope which deflects it on to the blocking filter.

4. A laser microdissection apparatus according to claim 3 **characterised in that** the separate microdissection beam path (18) includes lenses (21, 22) acting on the laser beam and/or an aperture plate (9) and/or the second dichroic beam splitter (26).

5. A laser microdissection apparatus according to claim 4 **characterised in that** the microdissection beam path is combined in a structural unit (20) which is fitted to the microscope (1) by way of at least one adjusting surface so that the laser beam passes through the blocking filter (17).

6. A laser microdissection apparatus according to claim 5 **characterised in that** the microdissection beam path is optically pre-adjusted in the structural unit (20) and the structural unit (20) and the microscope (1) have high-precision mounting surfaces, by means of which the structural unit (20) can be fitted in adjustment-free relationship to the microscope (1).

7. A laser microdissection apparatus according to one of the preceding claims **characterised in that** the microscope is in the form of an inverse microscope.

8. A laser microdissection apparatus according to one of the preceding claims **characterised in that** the microscope (1) is in the form of an upright microscope.

9. A laser microdissection apparatus according to one of the preceding claims **characterised in that** the excitation filter (15) and also the dichroic beam splitter (16) and the blocking filter (17) which are spectrally transmissive for the laser beam have such transmission properties which simultaneously permit spectral multi-band fluorescence observation with a plurality of fluorescence dyes.

## Revendications

1. Appareil de microdissection au laser, qui coupe avec un rayon laser d'un laser (19) un échantillon microscopique (3),
qui comprend un microscope (1) avec un trajet de rayon d'éclairage dirigé sur l'échantillon (3) et un trajet de rayon de représentation représentant l'échantillon (3) ainsi qu'une installation de fluorescence (14) qui présente un filtre d'excitation (15), un séparateur de faisceau dichromatique (16) et un filtre d'arrêt (17), **caractérisé en ce que** le séparateur de faisceau dichromatique (16) et le filtre d'arrêt (17) sont perméables spectralement au rayon laser,
**en ce qu'**il est associé au microscope (1) à l'extérieur du trajet de rayon d'éclairage présent avec l'installation de fluorescence (4) un trajet de rayon de microdissection séparé (18) qui guide le rayon laser sur le filtre d'arrêt (17) et le couple de cette manière dans le trajet de rayon d'éclairage,
et **en ce que** le rayon laser est dirigé à travers le filtre d'arrêt (17) et le séparateur de faisceau dichromatique (16) de l'installation de fluorescence (14) sur l'échantillon.

2. Appareil de microdissection au laser selon la revendication 1, **caractérisé en ce que** l'installation de fluorescence (14) et la coupe de l'échantillon (3) au moyen du rayon laser peuvent être activées simultanément.

3. Appareil de microdissection au laser selon l'une des revendications 1 ou 2, **caractérisé en ce que** le rayon laser du laser (19) est couplé par un deuxième séparateur de faisceau dichromatique (26) dans le trajet de rayon de représentation du microscope, qui le guide sur le filtre d'arrêt.

4. Appareil de microdissection au laser selon la revendication 3, **caractérisé en ce que** le trajet de rayon séparé de microdissection (18) comporte des lentilles (21, 22) agissant sur le rayon laser et/ou un diaphragme d'ouverture (9) et/ou le deuxième séparateur de faisceau dichromatique (26).

5. Appareil de microdissection au laser selon la revendication 4, **caractérisé en ce que** le trajet de rayon de microdissection est réuni en une unité de construction (20) qui est rapportée par au moins une face d'ajustement au microscope (1) de sorte que le rayon laser passe à travers le filtre d'arrêt (17).

6. Appareil de microdissection au laser selon la revendication 5, **caractérisé en ce que** le trajet de rayon de microdissection est ajusté préalablement optiquement dans l'unité de construction (20), et **en ce que** l'unité de construction (20) et le microscope (1) présentent des faces de montage d'une précision élevée au moyen desquelles l'unité de construction (20) peut être rapportée sans ajustement au microscope (1).

7. Appareil de microdissection au laser selon l'une des revendications précédentes, **caractérisé en ce que** le microscope est réalisé comme un microscope inverse.

8. Appareil de microdissection au laser selon l'une des revendications précédentes, **caractérisé en ce que** le microscope (1) est réalisé comme un microscope vertical.

9. Appareil de microdissection au laser selon l'une des revendications précédentes, **caractérisé en ce que** le filtre d'excitation (15) ainsi que le séparateur de faisceau dichromatique (16) et le filtre d'arrêt (17), qui sont perméables spectralement au rayon laser, présentent des propriétés de transmission permettant une observation spectrale de la fluorescence multi-bande avec plusieurs colorants de fluorescence en même temps.
